# EUROPÄISCHE PATENTANMELDUNG

(11) **EP 0 994 316 A2**
(43) Veröffentlichungstag der Anmeldung: **19.04.2000**
(21) Anmeldenummer: 99120384.5
(22) Anmeldetag: 13.10.1999
(51) Int. Cl.: F24J 2/46, F24J 2/24, F28F 9/06

(54) **Rohrstück sowie Befestigungs- und Halteelemente für eine Solarabsorberanlage**

(30) Priorität: 16.10.1998 DE 29818439 U
(71) Anmelder: Mertel, Oswald, 66299 Friedrichsthal (DE); Weise, Ulrich, 66280 Sulzbach (DE)
(72) Erfinder: Mertel, Oswald, 66299 Friedrichsthal (DE); Weise, Ulrich, 66280 Sulzbach (DE)
(74) Vertreter: Wieske, Thilo

(57) **Zusammenfassung**

Rohrstück sowie Befestigungs- und Halteelemente für eine Solarabsorberanlage (1), die aus Rohrstücken (3-6,8-11) besteht, die aneinander geclipst werden können und damit einfach verbindbar sind. Weiterhin sind Halteelemente (39) vorgesehen, mit denen Absorberbahnen (12-19,29) mit Absorberschläuchen (30,44) einfach beispielsweise an Mauern befestigbar sind sowie Befestigungselemente (200), mit denen Absorberbahnen (12-19,29) einfach an den Rohstücken (3-6,8-11) befestigt werden können.

## Beschreibung

Die vorliegende Erfindung betrifft ein Rohrstück sowie Befestigungs- und Halteelemente für eine Solarabsorberanlage.

Den Anmeldern sind Systeme bekannt, wonach bei bekannten Solarabsorberanlagen Rohre, die als Zulauf- oder Rücklaufrohre verwendet werden, aus Rohrstücken gebildet werden, indem die Rohrstücke verklebt werden, um eine Verbindung der Rohrstücke und eine Abdichtung zu erzielen. Weiterhin muß das Material zwischen Absorberschläuchen von Absorberbahnen in dem Bereich entfernt werden, in dem die Absorberschläuche auf Stutzen der Zulauf- oder Rücklaufrohre aufgeschoben werden, um dort eine Befestigung der Absorberschläuche auf den Stutzen zu ermöglichen.

Demgegenüber liegt der vorliegenden Erfindung das Problem zugrunde, die Teile der Solarabsorberanlage selbst sowie Befestigungs- und Halteelemente für derartige Teile so auszubilden, daß die Montage derartiger Solarabsorberanlagen möglichst vereinfacht wird.

Dies wird nach der vorliegenden Erfindung gemäß Anspruch 1 gelöst, indem Rohrstücke einer Solarabsorberanlage zusammensteckbar sind, wobei die Rohrstücke an ihrem einen Ende wenigstens einen Rohrverbinder aufweisen, der sich außerhalb des Außendurchmessers oder innerhalb des Innendurchmessers des Rohrstückes über dessen Ende hinaus erstreckt und der wenigstens eine Öffnung oder Einbuchtung aufweist, wobei die Rohrstücke an ihrem anderen Ende wenigstens eine Nase aufweisen, die sich auf der Außenfläche oder auf der Innenfläche des Rohrstückes befindet und die nach ihrer Position und Form so mit der wenigstens einen Öffnung oder Einbuchtung des wenigstens einen Rohrverbinders zusammenwirkt, daß die wenigstens eine Nase eines Rohrstückes beim Zusammenschieben mit einem anderen Rohrstück in die wenigstens eine Öffnung bzw. Einbuchtung des wenigstens einen Rohrverbinders des anderen Rohrstückes einrastet.

Durch diese Rohrverbinder ist es also möglich, die Rohrstücke durch einfaches Zusammenschieben zu verbinden. Die Rohrstücke werden gehalten, weil die Nase in die Öffnung bzw. Einbuchtung einrastet. Es ist dabei weiterhin möglich, eine O-Ringdichtung vorzusehen, so daß die Rohrstücke beim Zusammenschieben und Verbinden durch das Einrasten gleichzeitig abgedichtet werden. Der Rohrverbinder ist vorteilhaft federelastisch derart, daß dieser beim Zusammenschieben der Rohrstücke leicht zurückgedrückt wird, wodurch eine sichere Befestigung durch das Einrasten der Nase in die Öffnung bzw. Einbuchtung gegeben ist.

Weiterhin wird dies gelöst gemäß Anspruch 2, indem Rohrstücke einer Solarabsorberanlage zusammensteckbar sind, wobei die Rohrstücke an ihrem einen Ende wenigstens einen Rohrverbinder aufweisen, der sich außerhalb des Außendurchmessers oder innerhalb des Innendurchmessers des Rohrstückes über dessen Ende hinaus erstreckt und der wenigstens eine Nase aufweist, wobei die Rohrstücke an ihrem anderen Ende wenigstens eine Einbuchtung aufweisen, die sich auf der Außenfläche oder auf der Innenfläche des Rohrstückes befindet und die nach ihrer Position und Form so mit der wenigstens einen Nase des wenigstens einen Rohrverbinders zusammenwirkt, daß die wenigstens eine Nase des wenigstens einen Rohrverbinders beim Zusammenschieben mit einem anderen Rohrstück in die wenigstens eine Einbuchtung des anderen Rohrstückes einrastet.

Im Unterschied zu der Ausgestaltung der Rohrstücke nach Anspruch 1 sind hier die Anbringung der Nase sowie der Einbuchtung auf dem Rohrverbinder bzw. dem Rohrstück gerade vertauscht. Im übrigen sind die Vorteile dieselben, wie diese bereits im Zusammenhang mit Anspruch 1 erläutert wurden.

Bei dem Rohrstück nach Anspruch 3 erstreckt sich der wenigstens eine Rohrverbinder außerhalb des Außendurchmessers über das Ende des Rohrstückes hinaus. Die wenigstens eine Nase bzw. die wenigstens eine Einbuchtung befindet sich auf der Außenfläche des Rohrstückes.

Bei dieser Ausgestaltung erweist es sich als vorteilhaft, daß der Rohrverbinder nach der Montage der Rohrstücke einfach zugänglich bleibt. Bei einer Erweiterung oder Veränderung des Systems ist es also mit verhältnismäßig geringem Aufwand möglich, die Verbindung von Rohrstücken zu lösen, um eine entsprechende Veränderung des Gesamtsystems vornehmen zu können.

Bei dem Rohrstück nach Anspruch 4 ist an dem Ende des Rohrstückes, an dem sich der wenigstens eine Rohrverbinder befindet, eine Muffe angebracht, deren Innendurchmesser zumindest in etwa dem Außendurchmesser des Rohrstückes an dessen anderem Ende entspricht, wobei der wenigstens eine Rohrverbinder an der Muffe angebracht ist.

Dadurch ergibt sich eine vergleichsweise einfache Anbringung des Rohrverbinders an dem Rohrstück. Weiterhin ergibt sich eine einfache Handhabbarkeit bei der Montage von Rohrstücken, weil beim Zusammenschieben zweier Rohrstücke bereits eine Führung gegeben ist, wenn ein Rohrstück in die Muffe eines anderen Rohrstückes eingeschoben wird.

Bei dem Rohrstück nach Anspruch 5 verjüngt sich der wenigstens eine Rohrverbinder mit zunehmender Entfernung vom Ende des Rohrstückes. An dem anderen Ende des Rohrstückes ist neben der wenigstens einen Nase bzw. Einbuchtung wenigstens ein Führungselement angeordnet, mit dem die Rohrstücke über die Rohrverbinder beim Zusammenschieben so geführt werden, daß die wenigstens eine Nase eines Rohrstückes in die wenigstens eine Öffnung bzw. Einbuchtung des wenigstens einen Rohrverbinders eines anderen Rohrstückes einrastet bzw. daß die wenigstens eine Nase wenigstens eines Rohrverbinders eines Rohrstückes in die wenigstens eine Einbuchtung eines anderen Rohrstückes einrastet.

Dadurch werden weiterhin beim Zusammenschieben zweier Rohrstücke diese so geführt, daß die Verbindung der Rohrstücke einfach gegeben ist hinsichtlich der Handhabbarkeit der Rohrstücke beim Zusammenschieben. Durch die Verjüngung des Rohrverbinders sowie das Führungselement werden die Rohrstücke hinsichtlich einer radialen Verdrehung so geführt, daß eine Einrastung sicher gewährleistet ist. Beim Zusammenschieben muß also nicht auf die radiale Ausrichtung geachtet werden. Es genügt, die Rohrstücke in axialer Richtung zusammen zu schieben.

Bei dem Rohrstück nach Anspruch 6 weist der wenigstens eine Rohrverbinder zum Außendurchmesser des Rohrstückes einen gewissen Abstand auf. Das Rohrstück ist an seinem anderen Ende im Bereich der wenigstens einen Nase bzw. Einbuchtung soweit verdickt, daß der wenigstens eine Rohrverbinder dort zumindest nahezu anliegt.

Es hat sich als vorteilhaft erwiesen, die Rohrstücke mittels einer O-Ringdichtung abzudichten. Um eine sichere Abdichtung zu gewährleisten, ist die O-Ringdichtung außen dicker als das Rohrstück. Indem der Rohrverbinder zum Außendurchmesser des Rohrstückes einen gewissen Abstand aufweist, wird vorteilhaft vermieden, daß die O-Ringdichtung beim Zusammenschieben zweier Rohrstücke durch den wenigstens einen Rohrverbinder beschädigt wird. Indem weiterhin das Rohrstück an seinem anderen Ende im Bereich der wenigstens einen Nase bzw. Einbuchtung soweit verdickt ist, daß der wenigstens eine Rohrverbinder dort zumindest nahezu anliegt, wird weiterhin vorteilhaft erreicht, daß der Rohrverbinder fest anliegt.

Es ist im Zusammenhang mit Solarabsorbern weiterhin bekannt, daß ein Rohrstück mehrere seitliche Anschlußstutzen aufweist zum Anschluß von wenigstens einer aus mehreren Absorberschläuchen bestehenden Absorberbahn, Gemäß Anspruch 7 ist wenigstens einer der Anschlußstutzen länger ist als die übrigen Anschlußstutzen.

Dadurch wird die Handhabbarkeit beim Zusammenbau der Solarabsorberanlage verbessert, indem beim Aufschieben der Absorberschläuche auf die Anschlußstutzen nicht alle Absorberschläuche gleichzeitig in der richtigen Position relativ zu den Anschlußstutzen sein müssen. Es müssen zunächst nur die Absorberschläuche relativ zu den zugehörigen Anschlußstutzen richtig positioniert sein, die auf den wenigstens einen längeren Anschlußstutzen aufgeschoben werden. Beim weiteren Aufschieben der Absorberbahn müssen dann weitere Absorberschläuche erst dann relativ zu den zugehörigen Anschlußstutzen richtig positioniert werden, wenn andere Absorberschläuche bereits aufgeschoben und damit fixiert sind. Die Handhabbarkeit wird dadurch erheblich verbessert.

Bei dem Rohrstück nach Anspruch 8 sind die Anschlußstutzen zum Anschluß einer Absorberbahn in zwei Gruppen geteilt, wobei die beiden Gruppen zumindest in etwa gleich viele Anschlußstutzen aufweisen, wobei die Anschlußstutzen einer Gruppe dieselbe Länge aufweisen.

Wenn also eine Absorberbahn beispielsweise aus acht Absorberschläuchen besteht, ergibt sich eine Aufteilung in zwei Gruppen zu jeweils vier Anschlußstutzen. Es hat sich eine einfache Handhabbarkeit beim Aufschieben einer Absorberbahn auf das Rohrstück ergeben.

In der Ausgestaltung nach Anspruch 9 ist in das Rohrstück wenigstens ein Stauelement einbringbar.

Dabei erweist es sich als vorteilhaft, daß die Rohrstücke zu einem Rohr zusammengesetzt werden können, wobei das Wasser nicht aus einem Rohrstück in ein anderes Rohrstück fließen kann. Dies ist dann sinnvoll, wenn beispielsweise bei einer Installation das Zulaufrohr und das Rücklaufrohr auf derselben Seite der Solarabsorberbahnen angebracht werden sollen. Es ist dann notwendig, auf der gegenüberliegenden Seite das Wasser umzulenken. Beispielsweise können dann an ein Rohrstück zwei Absorberbahnen anschließbar sein. Auf der Seite, auf der das Wasser umgelenkt werden soll, werden an ein Rohrstück eine Absorberbahn angeschlossen, die an das Zulaufrohr angeschlossen ist sowie eine Absorberbahn, die an das Rücklaufrohr angeschlossen ist. Um eine definierte Flußrichtung des Wasser zu erhalten, ohne daß sich Wasser unterschiedlicher Temperaturen mischt, ist es vorteilhaft, wenn zwischen den verschiedenen Rohrstücken auf der Umlenkseite kein Wasser fließen kann. Vorteilhaft ist dann pro Rohrstück wenigstens ein Stauelement einbringbar, so daß damit der Wasserfluß zwischen Rohrstücken auf der Umlenkseite verhindert werden kann.

Es ist ersichtlich, daß die Maßnahme nach Anspruch 9 auch bei Rohrstücken einer Solarabsorberanlage einsetzbar ist, die anders verbunden werden als dies nach Anspruch 1 oder 2 geschieht. Die separate Weiterverfolgung dieses Merkmals in einer eigenen Anmeldung wird daher vorbehalten.

Vorteilhaft weisen diese Stauelemente Öffnungen auf. Dadurch ist es möglich, die Solarabsorberanlage vor dem Winter wegen der Frostgefahr zu entleeren. Auf der Umlenkseite kann das Wasser dann durch die Öffnungen der Stauelemente abfließen, die aber beim Betrieb der Solarabsorberanlage dennoch einen nennenswerten Austausch von Wasser zwischen den Rohrstücken auf der Umlenkseite verhindern. Diese Öffnungen können beispielsweise durch mehrere Schlitze gebildet werden, die sich vom Umfang der Stauelemente zu deren Mitte erstrecken.

Dabei ist es vorteilhaft, wenn die Rohrstücke beispielsweise mit den Maßnahmen nach Anspruch 1 oder 2 so zusammengesetzt werden können, daß diese demontierbar sind, weil es dann möglich ist, bei Bedarf die Stauelemente zu reinigen, wenn diese sich im Laufe der Zeit zugesetzt haben sollten.

Das Rohrstück nach Anspruch 10 weist wenigstens ein Befestigungsteil auf.

Dadurch ist es vorteilhaft möglich, zumindest einzelne Rohrstücke zu befestigen und dadurch die Solarabsorberanlage bei der Montage vom Gewicht her zu entlasten. Das Befestigungsteil kann beispielsweise eine Lasche sein, durch die ein Gurt gezogen wird oder ein sonstiges Element, durch das beispielsweise eine Verschraubung möglich wird.

Nach Anspruch 11 besteht ein Halteelement für eine Absorberbahn einer Solarabsorberanlage aus einem Unterteil und einem Oberteil, wobei das Unterteil sowie das Oberteil jeweils so ausgebildet sind, daß sie jeweils auf einer Seite zumindest eines am Rand einer Absorberbahn befindlichen Absorberschlauches anlegbar sind und wobei sie zugleich jeweils auf einer Seite zumindest eines am Rand einer benachbarten Absorberbahn befindlichen Absorberschlauches anlegbar sind, wobei das Oberteil und das Unterteil miteinander verbindbar sind.

Dadurch ergibt sich ein einfacher Aufbau einer Solarabsorberanlage, indem benachbarte Absorberbahnen hinsichtlich ihres Abstandes gehalten werden, wobei gleichzeitig eine Befestigung der Absorberbahnen mittels der Halteelemente erfolgt. Insbesondere wenn das Oberteil und das Unterteil zwischen den Absorberbahnen miteinander verbunden werden, ist es bei der Montage nicht notwendig, die Absorberbahn zwischen Absorberschläuchen aufzuschneiden, um Befestigungselemente anzubringen. Eine solche Befestigung des Oberteiles mit dem Unterteil kann beispielsweise durch ein Verrasten realisiert werden. Das Oberteil und das Unterteil können an einem oder mehreren Absorberschläuchen einer Absorberbahn anliegen.

Bei dem Halteelement nach Anspruch 12 weisen das Oberteil und/oder das Unterteil des Halteelementes in einer Richtung quer zu den Absorberschläuchen der Absorberbahnen jeweils wenigstens eine Nut auf.

Bei einer Montage der Absorberbahnen ist es dadurch beispielsweise möglich, das Halteelement an der Hauswand oder an dem Dach des Hauses anzubringen. Bei der Ausgestaltung nach Anspruch 12 ist es einfach möglich, ein Band um das Oberteil und das Unterteil herum zu legen. Zum einen werden das Oberteil und das Unterteil durch dieses Band zusammen gehalten. Weiterhin ist möglich, dieses Band an einer Dachlatte oder einem Dachsparren zu befestigen. Es ist also nicht notwendig, daß unmittelbar unter dem Halteelement eine Dachlatte oder ein Dachsparren vorhanden sein muß, um das Halteelement beispielsweise verschrauben zu können. Weiterhin ist es beispielsweise möglich, ein solches Band unter Dachziegeln durch zu einer Dachlatte oder einem Dachsparren zu führen, um es dort befestigen zu können (beispielsweise mittels Verschrauben oder durch Nageln). Durch die wenigstens eine Nut wird ein seitliches Abrutschen des Bandes von dem Halteelement vermieden.

Vorteilhaft ist es, wenn sowohl das Oberteil als auch das Unterteil eine Nut aufweisen. Es ist jedoch auch möglich, daß nur eines der beiden Teile eine Nut aufweist.

Bei der Ausgestaltung des Halteelementes nach Anspruch 13 ist die wenigstens eine Nut umlaufend.

In diesem Fall wird das Band um das Halteelement herum geführt.

Bei dem Halteelement nach Anspruch 14 weisen das Unterteil und das Oberteil jeweils mindestens eine Öffnung auf, die sich zwischen zwei Absorberbahnen befinden und die jeweils bei zusammengefügtem Oberteil und Unterteil übereinander liegen.

Dadurch ist es möglich, das Band durch übereinanderliegende Öffnungen durch das Unterteil und das Oberteil hindurch zu führen. Vorteilhafterweise sind diese Öffnungen so angebracht, daß sie bei montiertem Halteelement zwischen zwei Absorberbahnen liegen. Es kann dann vorteilhafterweise wieder vermieden werden, die Absorberbahnen zwischen Absorberschläuchen aufzuschneiden, um das Band durchzuführen, wenn mittels dieses Bandes jedes Halteelement einzeln befestigt werden soll. Das Band wird bei der Ausgestaltung nach Anspruch 16 zwischen den Absorberbahnen durch das Unterteil und das Oberteil geführt, was die Handhabbarkeit bei der Montage der Solarabsorberanlage vereinfacht.

Wenn in dem Oberteil und dem Unterteil des Halteelementes jeweils zwei Öffnungen vorhanden sind, liegen diese paarweise übereinander. Durch eine der paarweise übereinander liegenden Öffnungen kann das Band dann durch das Unterteil und das Oberteil geführt werden und durch die andere der paarweise übereinander liegenden Öffnungen durch das Oberteil und das Unterteil wieder zurückgeführt werden.

Bei dem Halteelement nach Anspruch 15 verläuft die jeweils wenigstens eine Nut zwischen den beiden Öffnungen.

Dadurch ist eine hinreichende Führung für das Band gegeben, so daß dieses nicht seitlich von dem Halteelement abrutschen kann.

Bei dem Halteelement nach Anspruch 16 weisen das Oberteil und/oder das Unterteil des Halteelementes jeweils wenigstens eine Aussparung auf, die sich parallel zu den Absorberschläuchen der Absorberbahnen erstreckt.

Dadurch ist es möglich, bei einem Band, das um das Halteelement herum gelegt ist, dieses Band zu fixieren. Dies kann beispielsweise erfolgen, indem Kabelbinder durch die Aussparungen gelegt werden. Durch das Zuziehen der Kabelbinder kann das Band in der quer zu den Aussparungen verlaufenden Nut fixiert werden.

Je nach den Montagebindungen kann beispielsweise auch ein im Zusammenhang mit der in den vorigen Ansprüchen beschrieben Nut erwähntes Band durch eine Aussparung geführt werden. Entsprechend ist es dann beispielsweise möglich, Kabelbinder durch die Nut zu führen, um das Band in der Aussparung zu fixieren.

Bei dem Halteelement nach Anspruch 17 verläuft die jeweils wenigstens eine Aussparung dort, wo sich die jeweils wenigstens eine Nut befindet.

Dadurch kann vorteilhaft eine Fixierung eines in der Nut verlaufenden Bandes erreicht werden.

Bei dem Halteelement nach Anspruch 18 weisen das Oberteil und das Unterteil jeweils wenigstens eine Bohrung auf, wobei die jeweils wenigstens eine Bohrung bei zusammengesetztem Oberteil und Unterteil übereinander liegen.

Durch diese Bohrung ist es beispielsweise möglich, das Halteelement zu verschrauben. Eine solche Verschraubung kann sinnvoll sein zur Befestigung an einer Hauswand, an einem Gartenzaun oder ähnlichem.

Anspruch 19 betrifft ein Befestigungselement zur Befestigung einer Absorberbahn an den Anschlußstutzen eines Rohrstückes einer Solarabsorberanlage, wobei das Befestigungselement als Klemmblock ausgebildet ist, der aus einem Unterteil und einem Oberteil besteht, wobei das Unterteil so ausgebildet ist, daß es zumindest weitgehend formschlüssig auf einer Seite der Absorberbahn anlegbar ist und wobei das Oberteil so ausgebildet ist, daß es zumindest weitgehend formschlüssig auf der anderen Seite der Absorberbahn anlegbar ist und wobei das Oberteil und das Unterteil des Klemmblockes zwischen wenigstens zwei Absorberschläuchen der Absorberbahn verbindbar ist.

Diese Verbindbarkeit kann dadurch gegeben sein, daß das Oberteil und das Unterteil verschraubbar sind. Ebenso kann diese Verbindbarkeit gegeben sein, indem das Oberteil und das Unterteil durch einen selbsteinklemmenden Draht miteinander zusammengebunden werden nach Art eines Kabelbinders. Oberteil und Unterteil können auch vernietet werden o. ä. Vorteilhaft ist es dadurch nicht mehr notwendig, im Bereich der Anschlußstutzen die Absorberbahn zwischen den Absorberschläuchen aufzuschneiden. um eine Befestigung der Absorberschläuche auf den Anschlußstutzen zu realisieren. Bei dem Befestigungselement nach Anspruch 19 werden Oberteil und Unterteil des Klemmblocks durch die Absorberbahn durch miteinander kontaktiert.

In vorteilhafter Ausgestaltung werden bei einem Befestigungselement nach Anspruch 20 bei einer Absorberbahn, die Auflageelemente zwischen Absorberschläuchen aufweist, das Oberteil und das Unterteil des Klemmblockes zwischen Absorberschläuchen verbunden, zwischen denen sich ein Auflageelement befindet.

Dadurch ergibt sich eine besonders gute und sichere Verbindung des Klemmblockes mit der Absorberbahn, so daß auch eine besonders gute Abdichtung im Bereich der Anschlußstutzen gewährleistet ist.

Von der Verwendung eines der Befestigungselemente nach den Ansprüchen 19 oder 20 kann abgesehen werden, wenn die Befestigung und Abdichtung der Schläuche der Absorberbahn auf den Anschlußstutzen des Rohrstücks durch eine Aufweitung der Schläuche der Absorberbahn realisiert ist.

Ein Ausführungsbeispiel der Erfindung ist in der Zeichnung dargestellt. Es zeigt dabei im einzelnen:
- Fig. 1:: ein Rohrstück einer Solarabsorberanlage,
- Fig. 2:: ein Endstück für ein Rohrstück einer Solarabsorberanlage,
- Fig. 3:: ein Rohrstück einer Solarabsorberanlage,
- Fig. 4:: zwei zusammengesetzte Rohrstücke einer Solarabsorberanlage,
- Fig. 5:: eine Absorberbahn einer Solarabsorberanlage,
- Fig. 6:: ein Befestigungselement für die Absorberschläuche einer Absorberbahn,
- Fig. 7:: ein Halteelement für Absorberbahnen eines Solarabsorberanlage,
- Fig. 8:: das Halteelement nach Figur 7 in einer anderen Ansicht und
- Fig. 9:: eine aus mehreren Teilen zusammengesetzte Solarabsorberanlage.

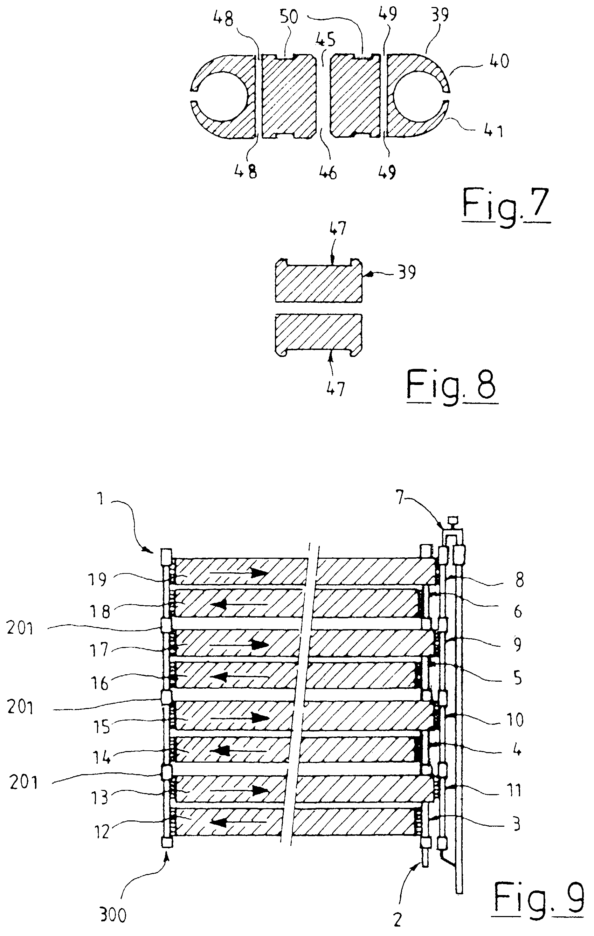

Figur 9 zeigt eine aus mehreren einzelnen Teilen zusammengesetzte Solarabsorberanlage 1. Es ist ein Zulaufrohr 2 vorgesehen, das aus mehreren Rohrstücken 3, 4, 5, 6 zusammengesetzt ist. Weiterhin ist ein Rücklaufrohr 7 vorgesehen, das ebenfalls aus mehreren Rohrstücken 8, 9, 10 und 13 zusammengesetzt ist. Zwischen dem Zulaufrohr 2 und dem Rücklaufrohr 7 befinden sich Absorberbahnen 12, 13, 14, 15, 16, 17, 18 und 19. Diese Absorberbahnen bestehen aus mehreren Absorberschläuchen, die miteinander verbunden sind, Diese Absorberbahnen sind vorteilhaft schwarz, um die Wärmeenergie optimal aufnehmen zu können. Zum Transport der Wärmeenergie werden die Absorberschläuche von Wasser durchströmt, das über das Zulaufrohr 2 kalt zufließt und über das Rücklaufrohr 7 erwärmt abfließt. Die einzelnen Teile der Solarabsorberanlage 1 sowie geeignete Befestigungs- und Halteelemente werden im Zusammenhang mit den anderen Figuren erläutert.

In dem Ausfürungsbeispiel der Figur 9 ist zu sehen, daß sich das Zulaufrohr 2 und das Rücklaufrohr 7 auf derselben Seite der Solaraborberanlage befinden, was Montagevorteile hat. Es muß kein Rohr quer geführt werden und es können auch Steigleitungen an unterschiedlichen Stellen des Hauses zum Zulaufund zur Rückführung vermieden werden. Auf der dem Zulaufrohr 2 und dem Rücklaufrohr 7 gegenüberliegenden Seite muß dann ein Umlenkrohr 300 vorhanden sein, das ebenfalls aus entsprechenden Rohrstücken zusammengesetzt sein kann. Vorteilhafterweise sind dann in dieses Umlenkrohr 300 Stauelemente 201 eingebracht, um einen Wasseraustausch zwischen den einzelnen Rohrstücken zu verhindern. Vorteilhaft wird dadurch in optimaler Weise eine Fließrichtung des Wassers definiert, ohne daß es zu Durchmischungen von Wasser unterschiedlicher Temperatur kommen kann. So kann Wasser beispielsweise durch das Zulaufrohr 2 in die Absorberbahn 12 fließen, auf der gegenüberliegenden über das Umlenkrohr 300 in die Absorberbahn 13 und von dort in das Rücklaufrohr 7. Es ist zu sehen, daß das Wasser in die Absorberbahn 13 fließende Wasser durch das unterste eingezeichnete Stauelement 201 gehindert wird, sich mit Wasser zu mischen, daß in dem Umlenkrohr 300 oberhalb fließt.

Vorteilhaft weist dieses Stauelement 201 Öffnungen auf, um im Winter ein Entleeren der Solarabsorberanlage zu ermöglichen.

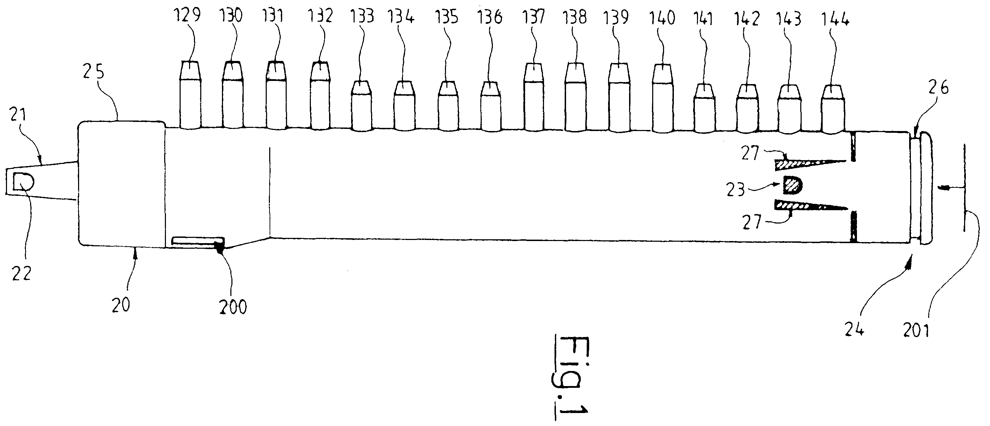

Figur 1 zeigt eines der Rohrstücke 3, 4, 5, 6, 8, 9, 10, 11 der Solarabsorberanlage 1.

Dieses Rohrstück weist an seinem einen Ende 20 Rohrverbinder 21 auf. Dieser Rohrverbinder 21 erstreckt sich über das eine Ende 20 des Rohrstückes hinaus und weist in dem gezeigten Beispiel eine Öffnung 22 auf In der maßstabsgerechten Darstellung der Figur 1 kann der Rohrverbinder 21 beispielsweise eine Länge von 30 mm aufweisen. Die Öffnung kann beispielsweise 5 mm groß sein. Um ein besseres Zusammenführen zweier Rohrstücke zu ermöglichen, kann die Öffnung 22 an ihrer Vorderseite abgeflacht sein.

Beim Zusammenschieben zweier Rohrstücke rastet der Rohrverbinder 21 mit seiner Öffnung 22 an einer Nase 23 ein, die am anderen Ende 24 des nächsten Rohrstückes angebracht ist. Eine besonders sichere Verbindung wird gewährleistet, wenn die Kontur der Nase 23 sowie der Öffnung 22 übereinstimmen.

Vorteilhaft weist das Rohrstück noch eine Muffe 25 auf, durch die die Rohrstücke beim Zusammenschieben in axialer Richtung richtig ausgerichtet werden. Diese Muffe stimmt mit ihrem Innendurchmesser in etwa mit dem Außendurchmesser des Rohrstückes überein. Der Rohrverbinder 21 ist an der Muffe 25 angebracht.

Zur Abdichtung des Rohres weisen die einzelnen Rohrstücke O-Ringdichtungen auf, die in die Nut 26 eingebracht werden. Da diese O-Ringdichtung über den Außendurchmesser des Rohrstückes hinaussteht, weist der Rohrverbinder 21 vorteilhaft einen gewissen Abstand zum Außendurchmesser des Rohrstückes auf, um eine Beschädigung der O-Ringdichtung beim Zusammenschieben zweier Rohrstücke zu vermeiden. Der Rohrverbinder kann beispielsweise um 0,5 mm von der Innenseite der Muffe 25 nach außen versetzt sein. Im Bereich der Nase 23 ist das Rohrstück vorteilhaft um einen entsprechenden Betrag dicker, um ein Federn des Rohrverbinders 21 zu verhindern.

Weiterhin ist der Darstellung der Figur 1 zu entnehmen, daß sich der Rohrverbinder 21 mit zunehmender Entfernung vom Rohrstück verjüngt. Am anderen Ende 24 des Rohrstückes ist zu sehen, daß im Bereich der Nase 23 zwei Führungselemente 27 vorhanden sind. Durch das Zusammenwirken dieser Führungselemente 27 mit der konischen Verjüngung des Rohrverbinders 21 wird erreicht, daß die Rohrstücke hinsichtlich einer radialen Verdrehung beim Zusammenschieben so geführt werden, daß ein sicheres Einrasten der Nase 23 in die Öffnung 22 gewährleistet ist.

Es ist ebenso zu sehen, daß an dem anderen Ende 24 ein Stauelement 201 eingebracht werden kann.

Insgesamt läßt sich also ein Rohr einfach aus mehreren Rohrstücken zusammensetzen, indem diese Rohrstücke zusammengeschoben werden. Durch dieses Zusammenschieben wird weiterhin eine Abdichtung des Rohres erreicht. Es ist ersichtlich, daß es möglich ist, den Rohrverbinder auch innerhalb des Rohrstückes vorzusehen. Vorteilhaft ist bei der Anbringung außerhalb, daß die Rohrstücke wieder demontierbar sind, was Wartungsarbeiten oder Anpassungen des Gesamtsystems erleichtert. Ebenso kann beispielsweise anstelle einer Öffnung 22 lediglich eine Einbuchtung vorhanden sein. Ebenso können beispielsweise die Nase an dem Rohrverbinder angebracht sein, wobei diese Nase dann in eine Einbuchtung an dem anderen Ende des nächsten Rohrstückes einrastet.

Weiterhin ist zu sehen, daß das Rohrstück an seinem Ende 20 an der Muffe 25 ein Befestigungsteil 200 aufweist, daß hier eine Öffnung ist, durch die ein Gurt gezogen werden kann. Mittels dieses Gutes kann das Rohrstück befestigt werden und damit die Solarabsorberanlage gewichtsmäßig entlastet werden.

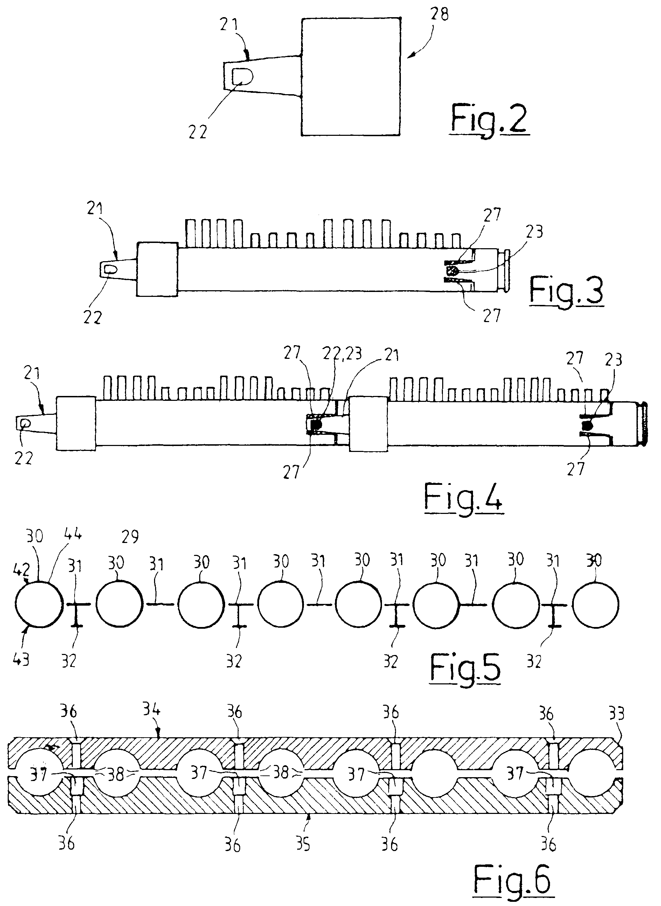

Figur 2 zeigt ein Endstück 28 zum Abschluß eines aus mehreren Rohrstücken zusammengesetzten Rohres einer Solarabsorberanlage. Das Endstück weist wiederum Rohrverbinder 21 auf, die eine Öffnung 22 haben. Dadurch kann dieses Endstück auf das Ende 24 eines Rohrstückes aufgebracht werden, um das Rohr an diesem Ende dicht abzuschließen. Ebenso kann ein entsprechend ausgebildetes anderes Abschlußstück vorgesehen werden, um ein Rohrstück an dessen Ende 20 abzudichten und zu verschließen. Aus Gründen der Übersichtlichkeit ist ein solches Abschlußstück hier nicht dargestellt.

Figur 3 zeigt wiederum ein Rohrstück einer Solarabsorberanlage, aus dem sich ein Rohr zusammensetzen läßt. Figur 4 zeigt zwei dieser Rohrstücke im zusammengeschobenen Zustand.

Den Darstellungen des Rohrstückes in den Figuren 1, 3 und 4 ist weiterhin zu entnehmen, daß das Rohrstück Anschlußstutzen 129 bis 144 aufweist. Diese Anschlußstutzen dienen dem Anschluß von Absorberschläuchen einer Absorberbahn. Der Darstellung der genannten Figuren ist zu entnehmen, daß bei aus jeweils acht Absorberschläuchen zusammengesetzten Absorberbahnen die zugehörigen Anschlußstutzen 129 bis 136 sowie 137 bis 144 jeweils in Vierergruppen unterschiedliche Längen aufweisen. Dadurch wird die Montage der Absorberbahnen vereinfacht, weil nicht alle acht Absorberschläuche gleichzeitig über die zugehörigen Anschlußstutzen aufgeschoben und dabei entsprechend ausgerichtet werden müssen. Vielmehr werden zunächst vier Absorberschläuche ausgerichtet und dann die Absorberbahn zunächst ein Stück weit aufgeschoben, so daß dann die nächsten vier Absorberschläuche ausgerichtet und aufgeschoben werden müssen. Die acht Anschlußstutzen für eine Absorberbahn 129 bis 136 sowie 137 bis 144 werden also jeweils in zwei Gruppen geteilt (129 bis 132, 133 bis 136 sowie 137 bis 140, 141 bis 144), so daß die Gruppen jeweils unterschiedlich lange Anschlußstutzen aufweisen. Es sind dabei auch andere Einteilungen der Anschlußstutzen 129 bis 144 hinsichtlich deren Länge möglich. Wesentlich ist, daß wenigstens einer dieser Anschlußstutzen eine größere Länge aufweist als die übrigen Anschlußstutzen, so daß die Absorberbahn über die Absorberschläuche erst nach und nach ausgerichtet werden muß. Die Anschlußstutzen können beispielsweise 27,5 mm und 22,5 mm lang sein.

Zur besseren Abdichtung der Absorberschläuche an den Anschlußstutzen kann im Abstand von etwa 10 mm vom Rohrstück ein umlaufender Bund an dem Anschlußstutzen vorhanden sein, an dem der Absorberschlauch aufgeweitet wird und abdichtet.

Figur 5 zeigt eine Absorberbahn 29 im Profil, die aus mehreren Absorberschläuchen 30 besteht. Diese Absorberschläuche 30 sind über Verbindungsteile 31 miteinander verbunden. Weiterhin sind Auflageelemente 32 in Form von T-Profilen zu sehen, die eine Abstützung einer liegenden Absorberbahn 29 bewirken.

Figur 6 zeigt ein Befestigungselement für die Befestigung einer Absorberbahn 29 an den Anschlußstutzen eines Rohrstückes. Das Befestigungselement 33 ist als Klemmblock ausgebildet, der aus einem Oberteil 34 und aus einem Unterteil 35 besteht. Das Oberteil 34 und das Unterteil 35 liegen formschlüssig an der Oberseite bzw. der Unterseite einer Absorberbahn 29 an. Weiterhin sind Bohrungen 36 zu sehen, durch die das Oberteil 34 mit dem Unterteil 35 verschraubbar ist.

Dadurch kann eine Absorberbahn 29 in einfacher Weise auf den Anschlußstutzen eines Rohrstückes befestigt werden.

Wenn die Absorberbahn 29 weiterhin Auflageelemente 32 aufweist, hat es sich als vorteilhaft erwiesen, die Verschraubung von Oberteil 34 und Unterteil 35 des Klemmblockes 33 an den Stellen vorzusehen, an denen sich die Auflageelemente 32 befinden. In dem Unterteil 35 sind entsprechende Aussparungen 37 vorhanden zur Aufnahme der Auflageelemente 32. Weiterhin ist zu sehen, daß Oberteil 34 und Unterteil 35 an den Stellen Aussparungen 38 aufweisen, an denen der Anschlußstutzen einen umlaufenden Bund aufweist. Dadurch wird vorteilhaft eine Beschädigung der Absorberschläuche vermieden.

Im Zusammenhang mit den Anschlußstutzen 129 bis 146 eines Rohrstückes war ausgeführt, daß diese Anschlußstutzen 129 bis 146 einen umlaufenden Bund aufweisen, an dem die Absorberschläuche aufgeweitet werden, so daß durch die Aufweitung eine Abdichtung erfolgt. Der Klemmblock 33 kann so ausgebildet sein, daß er die Absorberbahnen im Bereich des Bundes der Anschlußstutzen umgreift und zusätzlich zu einer Klemmwirkung der Absorberschläuche im Bereich der Bünde der Anschlußstutzen führt. Es ist auch möglich, daß der Klemmblock die Absorberbahnen im Bereich zwischen den Bünden und den Anschlußstutzen umgreift. Auch dadurch wird sichergestellt, daß die Absorberschläuche auf den Anschlußstutzen halten. Die Dichtwirkung entsteht dann wieder durch die Aufweitung der Absorberschläuche.

Figuren 7 und 8 zeigen ein Ausführungsbeispiel eines Halteelementes 39 für Absorberbahnen einer Solarabsorberanlage. Das Halteelement 39 besteht aus einem Oberteil 40 sowie einem Unterteil 41.

Das Unterteil 41 sowie das Oberteil 40 sind jeweils so ausgebildet, daß sie jeweils auf einer Seite 42 und 43 eines am Rand einer Absorberbahn 29 befindlichen Absorberschlauches 44 anlegbar sind und daß sie zugleich jeweils auf einer Seite 42 und 43 eines am Rand einer benachbarten Absorberbahn 29 befindlichen Absorberschlauches 44 anlegbar sind, wobei das Oberteil 40 und das Unterteil 41 miteinander verbindbar sind.

Diese Verbindung kann beispielsweise realisiert werden, indem das Oberteil 41 und das Unterteil 40 jeweils wenigstens eine Bohrung 45 und 46 aufweisen, wobei die jeweils wenigstens eine Bohrung 45 und 46 bei zusammengesetztem Oberteil 41 und Unterteil 40 übereinander liegen. Durch diese Bohrungen 45 und 46 können Oberteil 41 und Unterteil 40 miteinander verschraubt werden. Gleichzeitig mit dieser Verbindung kann das Halteelement 39 beispielsweise an einer Wand befestigt werden, wenn die Schraube hinreichend lang ist.

Das in den Figuren 7 und 8 dargestellte Halteelement 39 dient der Verbindung und Befestigung zweier Absorberbahnen im Bereich einer Muffe 25 eines Rohrstückes. Bei der in Figur 8 gezeigten Perspektive des Halteelementes 39 ist zu sehen, daß das Oberteil 41 und das Unterteil 40 eine Nut 47 aufweisen. Diese Nut 47 läuft quer zu den Absorberschläuchen einer Absorberbahn. In diese Nut 47 ist beispielsweise ein Band einlegbar, mit dem das Oberteil 41 und das Unterteil 40 miteinander verbunden werden können. Neben dieser Verbindung von Oberteil 41 und Unterteil 40 kann mit diesem Band auch eine Befestigung beispielsweise an einer Dachlatte oder einem Dachsparren realisiert werden, der sich nicht unmittelbar unter dem Halteelement 39 befindet. Dieses Band kann beispielsweise auch unter Dachziegeln durchgeführt werden, Durch die Nut 47 wird ein seitliches Abrutschen des Bandes verhindert.

Die Nut 47 kann umlaufend sein. Dann ist es notwendig, zur Montage eines Bandes eine Absorberbahn zwischen zwei Absorberschläuchen aufzuschneiden, um das Band durchzuführen, wenn jedes Halteelement 39 einzeln befestigt werden soll.

Vorteilhaft weisen das Oberteil 41 und das Unterteil 40 jeweils zwei Öffnungen 48 und 49 auf, die sich zwischen zwei Absorberbahnen befinden und die bei zusammengefügtem Oberteil und Unterteil paarweise übereinander liegen. Dadurch ist es beispielsweise möglich, bei der Darstellung der Figur 6 ein von links kommendes Band zunächst durch die Öffnungen 49 des Unterteils 41 sowie des Oberteiles 40 zu führen und dieses Band durch die Öffnungen 48 des Oberteiles 40 sowie des Unterteiles 41 zurückzuführen. Dadurch werden wiederum Oberteil 40 und Unterteil 41 miteinander verbunden, Weiterhin kann das Halteelement 39 insgesamt befestigt werden. Dabei erweist es sich als vorteilhaft, daß das Halteelement 39 einzeln befestigt werden kann, wobei keine Absorberbahn geschnitten werden muß, wenn sich die Öffnungen 48 und 49 zwischen zwei benachbarten Absorberbahnen befinden. Zweckmäßigerweise verläuft die Nut 47 in dem Oberteil 40 bzw. dem Unterteil 41 zwischen den Öffnungen 48 und 49.

Weiterhin ist zu sehen, daß das Oberteil 40 und das Unterteil 41 des Halteelementes 39 jeweils zwei Aussparungen 50 aufweisen, die sich parallel zu den Absorberschläuchen der Absorberbahnen erstrecken. Durch diese Aussparungen können beispielsweise Kabelbinder geführt werden, um ein in der Nut 47 liegendes Band zu fixieren. Zweckmäßigerweise befinden sich die Aussparungen 50 dort, wo sich die Nut 47 befindet, d.h. zwischen den Öffnungen 48 und 49.

Abhängig von den Montagebedingungen ist es auch möglich, ein Band durch eine der Aussparungen 50 oder beide Aussparungen zu führen, um das Halteelement 39 in einer anderen Richtung zu halten. Dies gilt zum Beispiel, wenn die Absorberbahnen bei einer Montage auf einem Dach nicht horizontal sondern in vertikaler Richtung verlaufen,

Eine Montage mit diesem Halteelement kann beispielsweise so aussehen, daß das Band zunächst an einem Dachsparren, beispielsweise dem oberen Dachsparren, befestigt wird. Dieses Band wird unter dem Unterteil des Halteelementes geführt und durch die Öffnungen 49 des Unterteiles 41 und des Oberteiles 40 nach oben geführt. Wenn wie in dem Ausführungsbeispiel gezeigt, zweite Öffnungen 48 vorhanden sind, kann das Band durch diese Öffnungen 48 zurück geführt werden. Indem das Band wiederum an einem Dachsparren verschraubt wird, kann eine Befestigung erreicht werden.

Es ist auch möglich, mit der Befestigung des Bandes zu warten bis die Solarabsorberanlage fertig vormontiert ist, um dann ggf. mit mehreren Bändern und zugehörigen Halteelementen die Anlage insgesamt zu befestigen. Vorteilhafterweise werden dann mehrere Bänder befestigt und auf dem Dach parallel nach unten ausgelegt. Beim Vormontieren der Anlage werden diese Bänder jeweils in die Nuten 47 der Unterteile 41 von Halteelementen 39 gelegt, mit denen verschiedene Absorberbahnen gehalten werden sollen. Nachdem dann die unterste Absorberbahn vormontiert worden ist, werden die Bänder durch die Nuten 47 der Oberteile 40 der Halteelemente 39 wieder nach oben geführt und dann am oberen Ende oberhalb der obersten Absorberbahn wieder befestigt. Insbesondere bei dieser Montageart erweisen sich die Aussparungen 50 als vorteilhaft. Wenn bei jedem Halteelement 39 zwei Aussparungen 50 vorhanden sind, ist es möglich, während der Vormontage zunächst das in den Nuten 47 der Unterteile 41 laufende Band beispielsweise mittels eines Kabelbinders, der durch eine der Aussparungen 50 geführt wird, zu befestigen. Dadurch kann bei der Vormontage ein Verrutschen des Bandes verhindert werden, Nachdem das Band dann nach dem Vormontieren der untersten Absorberbahn durch die Nuten 47 der Oberteile 40 gelegt ist, wird das Band wiederum mittels eines durch die andere Aussparung 50 des Halteelementes 39 laufenden Kabelbinders befestigt. Die Aussparungen 50 können beispielsweise so gestaltet sein, daß die Kabelbinder beim Zuziehen zumindest dann flächig mit der Auflagefläche des Bandes in der Nut 47 des Unterteiles 41 oder des Oberteiles 40 abschließen, wenn mittels des Kabelbinders in der Nut 47 des Unterteiles 41 oder des Oberteiles 40 kein Band befestigt werden soll. Dies gilt beispielsweise bei der Vormontage für die Nuten 47 der Oberteile 40, wenn das Band im ersten Teil der Vormontage nur nach unten läuft. Die Aussparungen 50 können auch so gestaltet sein, daß die Kabelbinder im Bereich des Bandes dieses in der Nut 47 des Halteelementes 39 einklemmen, indem die Nut 47 im Bereich der Aussparung 50 eine entsprechende Querrille aufweist, in die der Kabelbinder ggf. mit einem darunter liegenden Band einklemmbar ist.

Insgesamt zeigt sich, daß mit den beschriebenen Teilen eine einfache Montage einer Solarabsorberanlage möglich ist. Dies ist insbesondere deswegen wichtig, weil bei einer Montage im Dachbereich die Bewegungsfähigkeit des Monteurs zur eigenen Sicherung eingeschränkt ist.

## Patentansprüche

1. Rohrstück für eine Solarabsorberanlage,
dadurch gekennzeichnet, daß die Rohrstücke (3, 4, 5, 6, 8, 9, 10, 11) zusammensteckbar sind, wobei die Rohrstücke (3, 4, 5, 6, 8, 9, 10, 11) an ihrem einen Ende (20) wenigstens einen Rohrverbinder (21) aufweisen, der sich außerhalb des Außendurchmessers oder innerhalb des Innendurchmessers des Rohrstückes (3, 4, 5, 6, 8, 9, 10, 11) über dessen Ende (20) hinaus erstreckt und der wenigstens eine Öffnung (22) oder Einbuchtung aufweist, wobei die Rohrstücke (3, 4, 5, 6, 8, 9, 10, 11) an ihrem anderen Ende (24) wenigstens eine Nase (23) aufweisen, die sich auf der Außenfläche oder auf der Innenfläche des Rohrstückes (3, 4, 5, 6, 8, 9, 10, 11) befindet und die nach ihrer Position und Form so mit der wenigstens einen Öffnung (22) oder Einbuchtung des wenigstens einen Rohrverbinders (21) zusammenwirkt, daß die wenigstens eine Nase (23) eines Rohrstückes (3, 4, 5, 6, 8, 9, 10, 11) beim Zusammenschieben mit einem anderen Rohrstück (3, 4, 5, 6, 8, 9, 10, 11) in die wenigstens eine Öffnung (22) bzw. Einbuchtung des wenigstens einen Rohrverbinders (21) des anderen Rohrstückes (3, 4, 5, 6, 8, 9, 10, 11) einrastet.

2. Rohrstück für eine Solarabsorberanlage,
dadurch gekennzeichnet, daß die Rohrstücke (3, 4, 5, 6, 8, 9, 10, 11) zusammensteckbar sind, wobei die Rohrstücke (3, 4, 5, 6, 8, 9, 10, 11) an ihrem einen Ende (20) wenigstens einen Rohrverbinder (21) aufweisen, der sich außerhalb des Außendurchmessers oder innerhalb des Innendurchmessers des Rohrstückes (3, 4, 5, 6, 8, 9, 10, 11) über dessen Ende (20) hinaus erstreckt und der wenigstens eine Nase aufweist, wobei die Rohrstücke (3, 4, 5, 6, 8, 9, 10, 11) an ihrem anderen Ende (24) wenigstens eine Einbuchtung aufweisen, die sich auf der Außenfläche oder auf der Innenfläche des Rohrstückes (3, 4, 5, 6, 8, 9, 10, 11) befindet und die nach ihrer Position und Form so mit der wenigstens einen Nase des wenigstens einen Rohrverbinders (21) zusammenwirkt, daß die wenigstens eine Nase des wenigstens einen Rohrverbinders (21) beim Zusammenschieben mit einem anderen Rohrstück (3, 4, 5, 6, 8, 9, 10, 11) in die wenigstens eine Einbuchtung des anderen Rohrstückes (3, 4, 5, 6, 8, 9, 10, 11) einrastet.

3. Rohrstück nach Anspruch 1 oder 2,
dadurch gekennzeichnet, daß sich der wenigstens eine Rohrverbinder (21) außerhalb des Außendurchmessers über das Ende des Rohrstückes (3, 4, 5, 6, 8, 9, 10, 11) hinaus erstreckt und daß sich die wenigstens eine Nase (23) bzw. die wenigstens eine Einbuchtung auf der Außenfläche des Rohrstückes (3, 4, 5, 6, 8, 9, 10, 11) befindet.

4. Rohrstück nach einem der Ansprüche 1 bis 3,
dadurch gekennzeichnet, daß an dem Ende (20) des Rohrstückes (3, 4, 5, 6, 8, 9, 10, 11), an dem sich der wenigstens eine Rohrverbinder (21) befindet, eine Muffe (25) angebracht ist, deren Innendurchmesser zumindest in etwa dem Außendurchmesser des Rohrstückes (3, 4, 5, 6, 8, 9, 10, 11) an dessen anderem Ende (24) entspricht, wobei der wenigstens eine Rohrverbinder (21) an der Muffe (25) angebracht ist.

5. Rohrstück nach wenigstens einem der Ansprüche 1 bis 4,
dadurch gekennzeichnet, daß sich der wenigstens eine Rohrverbinder (21) mit zunehmender Entfernung vom Ende (20) des Rohrstückes (3, 4, 5, 6, 8, 9, 10, 11) verjüngt und daß an dem anderen Ende (24) des Rohrstückes (3, 4, 5, 6, 8, 9, 10, 11) neben der wenigstens einen Nase (23) bzw. Einbuchtung wenigstens ein Führungselement (27) angeordnet ist, mit dem die Rohrstücke (3, 4, 5, 6, 8, 9, 10, 11) über die Rohrverbinder (21) beim Zusammenschieben so geführt werden, daß die wenigstens eine Nase (23) eines Rohrstückes (3, 4, 5, 6, 8, 9, 10, 11) in die wenigstens eine Öffnung (22) bzw. Einbuchtung des wenigstens einen Rohrverbinders (21) eines anderen Rohrstückes (3, 4, 5, 6, 8, 9, 10, 11) einrastet bzw. daß die wenigstens eine Nase wenigstens eines Rohrverbinders (21) eines Rohrstückes (3, 4, 5, 6, 8, 9, 10, 11) in die wenigstens eine Einbuchtung eines anderen Rohrstückes (3, 4, 5, 6, 8, 9, 10, 11) einrastet.

6. Rohrstück nach einem der Ansprüche 1 bis 5,
dadurch gekennzeichnet, daß der wenigstens eine Rohrverbinder (21) zum Außendurchmesser des Rohrstückes (3, 4, 5, 6, 8, 9, 10, 11) einen gewissen Abstand aufweist und daß das Rohrstück (3, 4, 5, 6, 8, 9, 10, 11) an seinem anderen Ende (24) im Bereich der wenigstens einen Nase (23) bzw. Einbuchtung soweit verdickt ist, daß der wenigstens eine Rohrverbinder (21) dort zumindest nahezu anliegt.

7. Rohrstück nach einem der Ansprüche 1 bis 6, wobei das Rohrstück (3, 4, 5, 6, 8, 9, 10, 11) mehrere seitliche Anschlußstutzen (129 - 144) aufweist zum Anschluß von wenigstens einer aus mehreren Absorberschläuchen (30, 44) bestehenden Absorberbahn (12-19, 29), dadurch gekennzeichnet, daß wenigstens einer der Anschlußstutzen (129 - 132, 137 - 140) länger ist als die übrigen Anschlußstutzen (133 - 136, 141 - 144).

8. Rohrstück nach Anspruch 7,
dadurch gekennzeichnet, daß die Anschlußstutzen (129 - 136, 137 - 144) zum Anschluß einer Absorberbahn (12 - 19, 29) in zwei Gruppen (129 - 132, 133 - 136; 137 - 140, 141 - 144) geteilt sind, wobei die beiden Gruppen (129 - 132, 133 - 136; 137 - 140, 141 - 144) zumindest in etwa gleich viele Anschlußstutzen aufweisen, wobei die Anschlußstutzen einer Gruppe (129 - 132; 133 - 136; 137 - 140; 141 - 144) dieselbe Länge aufweisen.

9. Rohrstück nach einem der Ansprüche 1 bis 8,
dadurch gekennzeichnet, daß in das Rohrstück (3, 4, 5, 6, 8, 9, 10, 11) wenigstens ein Stauelement (201) einbringbar ist.

10. Rohrstück nach einem der Ansprüche 1 bis 9,
dadurch gekennzeichnet, daß das Rohrstück (3, 4, 5, 6, 8, 9, 10, 11) wenigstens ein Befestigungsteil (200) aufweist.

11. Halteelement für eine Absorberbahn einer Solarabsorberanlage,
dadurch gekennzeichnet, daß das Halteelement (39) aus einem Unterteil (41) und einem Oberteil (40) besteht, wobei das Unterteil (41) sowie das Oberteil (40) jeweils so ausgebildet sind, daß sie jeweils auf einer Seite (42, 43) zumindest eines am Rand einer Absorberbahn (29) befindlichen Absorberschlauches (44) anlegbar sind und daß sie zugleich jeweils auf einer Seite (42, 43) zumindest eines am Rand einer benachbarten Absorberbahn (29) befindlichen Absorberschlauches (44) anlegbar sind, wobei das Oberteil (40) und das Unterteil (41) miteinander verbindbar sind.

12. Halteelement nach Anspruch 11,
dadurch gekennzeichnet, daß das Oberteil (40) und/oder das Unterteil (41) des Halteelementes (39) in einer Richtung quer zu den Absorberschläuchen (30, 44) der Absorberbahnen (12 - 19, 29) jeweils wenigstens eine Nut (47) aufweisen.

13. Halteelement nach Anspruch 12,
dadurch gekennzeichnet, daß die wenigstens eine Nut (47) umlaufend ist.

14. Halteelement nach Anspruch 11 oder 12,
dadurch gekennzeichnet, daß das Unterteil (41) und das Oberteil (40) jeweils mindestens eine Öffnung (48, 49) aufweisen, die sich zwischen zwei Absorberbahnen (12 - 19, 29) befindet und die bei zusammengefügtem Oberteil (40) und Unterteil (41) jeweils übereinander liegen,

15. Halteelement nach Anspruch 14 in Rückbeziehung auf Anspruch 12,
dadurch gekennzeichnet, daß bei zwei Öffnungen (48, 49) pro Oberteil (40) und Unterteil (41) die jeweils wenigstens eine Nut (47) zwischen den beiden Öffnungen (48, 49) verläuft.

16. Halteelement nach einem der Ansprüche 11 bis 15,
dadurch gekennzeichnet, daß das Oberteil (40) und/oder das Unterteil (41) des Halteelementes (39) jeweils wenigstens eine Aussparung (50) aufweisen, die sich parallel zu den Absorberschläuchen (30, 44) der Absorberbahnen (12 - 19, 29) erstreckt.

17. Halteelement nach Anspruch 16,
dadurch gekennzeichnet, daß die jeweils wenigstens eine Aussparung (50) dort verläuft, wo sich die jeweils wenigstens eine Nut (47) befindet.

18. Halteelement nach einem der Ansprüche 11 bis 17,
dadurch gekennzeichnet, daß das Oberteil (40) und das Unterteil (41) jeweils wenigstens eine Bohrung (45, 46) aufweisen, wobei die jeweils wenigstens eine Bohrung (45, 46) bei zusammengesetztem Oberteil (40) und Unterteil (41) übereinander liegen.

19. Befestigungselement zur Befestigung einer Absorberbahn (12 - 19, 29) an den Anschlußstutzen (129 - 144) eines Rohrstückes (3, 4, 5, 6, 8, 9, 10, 11) einer Solarabsorberanlage (1),
dadurch gekennzeichnet, daß das Befestigungselement (33) als Klemmblock ausgebildet ist, der aus einem Unterteil (35) und einem Oberteil (34) besteht, wobei das Unterteil (35) so ausgebildet ist, daß es zumindest weitgehend formschlüssig auf einer Seite der Absorberbahn (12 - 19, 29) anlegbar ist und wobei das Oberteil (34) so ausgebildet ist, daß es zumindest weitgehend formschlüssig auf der anderen Seite der Absorberbahn (12 - 19, 29) anlegbar ist und wobei das Oberteil (34) und das Unterteil (35) des Befestigungselementes (33) zwischen wenigstens zwei Absorberschläuchen (30) der Absorberbahn (12 - 19, 29) verbindbar ist.

20. Befestigungselement nach Anspruch 19,
dadurch gekennzeichnet, daß bei einer Absorberbahn (12 - 19, 29), die Auflageelemente (32) zwischen Absorberschläuchen (30) aufweist, das Oberteil (34) und das Unterteil (35) des Befestigungselementes (33) zwischen Absorberschläuchen (30) verbindbar ist, zwischen denen sich ein Auflageelement (32) befindet.
